# EUROPÄISCHE PATENTSCHRIFT

(11) **EP 2 928 734 B1**
(45) Veröffentlichungstag und Bekanntmachung des Hinweises auf die Patenterteilung: **17.05.2017**
(21) Anmeldenummer: 13785360.2
(22) Anmeldetag: 31.10.2013
(51) Int. Cl.: B60R 25/08, B60T 7/16, B60T 7/20, B60T 13/66, B60D 1/62

(54) **VERFAHREN, SYSTEM UND STEUEREINRICHTUNG ZUM BETÄTIGEN EINES WEGFAHRSCHUTZES FÜR ANHÄNGERFAHRZEUGE**
METHOD, SYSTEM AND CONTROL DEVICE FOR ACTUATING AN IMMOBILISER FOR TRAILER VEHICLES
PROCÉDÉ, SYSTÈME ET DISPOSITIF DE COMMANDE, DESTINÉS À ACTIONNER UN ORGANE D'IMMOBILISATION POUR UNE REMORQUE

(30) Priorität: 07.12.2012 DE 102012023974
(43) Veröffentlichungstag der Anmeldung: 14.10.2015
(73) Patentinhaber: WABCO GmbH, 30453 Hannover (DE)
(72) Erfinder: BLECKMANN, Björn, 30163 Hannover (DE); GORCZYCA, Sven, 30173 Hannover (DE); KUPKA, David, 31137 Hildesheim (DE); RISSE, Rainer, 30982 Pattensen-Reden (DE); STENDER, Axel, 31787 Hameln (DE)
(74) Vertreter: Lauerwald, Jörg
(86) Internationale Anmeldenummer: PCT/EP2013/003284
(87) Internationale Veröffentlichungsnummer: WO 2014/086450

(56) Entgegenhaltungen:
- EP-A1- 1 504 975
- WO-A1-94/29155
- WO-A1-2007/123490
- WO-A1-2011/160195
- WO-A2-01/44030
- BE-A6- 1 015 702
- DE-A1-102006 042 925
- DE-A1-102007 017 659
- DE-B- 1 203 141
- US-A1- 2004 036 350

## Beschreibung

Die Erfindung betrifft ein Verfahren, ein System sowie eine Steuereinrichtung zum Betätigen eines Wegfahrschutzes für ein mit einem Zugfahrzeug kuppelbares Anhängerfahrzeug, mit einem elektronischen Anhängerbremssystem und einer davon angesteuerten, eine Feststellbremse aufweisenden Bremsanlage, wobei das elektronische Anhängerbremssystem mittels einer Steuereinrichtung ansteuerbar ist, um den Wegfahrschutz durch Ansteuern der Bremsanlage zu bewirken und um das Anhängerfahrzeug gegen ein unberechtigtes Entfernen mittels der Bremsanlage einzubremsen.

Ein derartiges System ist in der DE 10 2006 042 925 A1 beschrieben. Das System umfasst ein elektronisches Anhängerbremssystem sowie eine Bremsanlage und weist eine Bedienvorrichtung auf, die dazu eingerichtet ist, zum Aktivieren und Deaktivieren des Schutzes vor unberechtigtem Entfernen eines Anhängerfahrzeuges betätigt zu werden, so dass das elektronische Anhängerbremssystem angesteuert wird, um den Schutz mittels der Bremsanlage zu bewirken und um das Anhängerfahrzeug beim unberechtigten Entfernen mittels der Bremsanlage einzubremsen. Die Bremsanlage des Anhängerfahrzeugs weist ein Steuerelement auf, das mindestens zwei stabile Betriebszustände eingehen kann, in denen das Steuerelement jeweils nach dem Abschalten der Energiezufuhr verbleibt, wobei in einem ersten Zustand eine Federspeicherbremse eingelegt ist. Die Bedienvorrichtung ist dazu eingerichtet, durch Eingabe eines kodierten Zahlenwertes (PIN) und/oder einer Magnetkarte und/oder einer Chipkarte und/oder durch ein Funksignal aktiviert und deaktiviert zu werden. Dieses System zum Schutz vor unberechtigtem Entfernen eines Anhängerfahrzeuges hat sich bewährt, ist aber hinsichtlich seiner Bedienung verbesserungsfähig.

Vor diesem Hintergrund liegt der Erfindung die Aufgabe zugrunde, ein Verfahren, ein System und eine Steuereinrichtung zum Betätigen eines Wegfahrschutzes für mit einem Zugfahrzeug kuppelbare Anhängerfahrzeuge vorzuschlagen, die nicht auf das Aktivieren und Deaktivieren durch Eingabe eines kodierten Zahlenwertes (PIN) und/oder einer Magnetkarte und/oder einer Chipkarte angewiesen sind, und mit denen gewährleistet ist, dass der Wegfahrschutz nicht wirksam wird, so lange sich ein Zugfahrzeug mit einem mit dem Wegfahrschutz versehenen Anhängerfahrzeug im öffentlichen Straßenverkehr bewegt.

Die Lösung dieser Aufgabe wird hinsichtlich des Verfahrens durch die Merkmale des Patentanspruchs 1 gelöst, während ein System zur Durchführung dieses Verfahrens sowie eine zugehörige Steuereinrichtung in den anderen unabhängigen Patentansprüchen definiert sind. Jeweils zugeordnete Unteransprüche geben vorteilhafte Weiterbildungen der Erfindung an.

Demnach geht die Erfindung gemäß den Merkmalen des Patentanspruchs 1 aus von einem Verfahren zum Betätigen eines Wegfahrschutzes für ein mit einem Zugfahrzeug kuppelbares Anhängerfahrzeug, mit einem elektronischen Anhängerbremssystem und einer davon angesteuerten, eine Feststellbremse aufweisenden Bremsanlage, wobei das elektronische Anhängerbremssystem mittels einer Steuereinrichtung ansteuerbar ist, um den Wegfahrschutz durch Ansteuern der Bremsanlage zu bewirken und um das Anhängerfahrzeug gegen ein unberechtigtes Entfernen mittels der Bremsanlage einzubremsen.

Um den Wegfahrschutz durch Ansteuern der Bremsanlage zu bewirken und das Anhängerfahrzeug gegen unberechtigtes Entfernen mittels der Bremsanlage einzubremsen wird vorgeschlagen, dass das elektronische Anhängerbremssystem die Bremsanlage in den Zustand "Bremse geschlossen" oder "Bremse gelöst" versetzt, wenn eine Feststellbremse in einem Zugfahrzeug durch einen Fahrzeugführer in Schließrichtung oder Lösrichtung betätigt wird, wobei der Wegfahrschutz in der Weise aktiviert wird, dass das elektronische Anhängerbremssystem nur dann ferngesteuert durch die Steuereinrichtung angesteuert wird, um die Feststellbremse der Bremsanlage dauerhaft in den Zustand "Bremse geschlossen" zu versetzen, wenn das Anhängerfahrzeug vom Zugfahrzeug abgekuppelt und abgestellt ist, und bei dem der Wegfahrschutz deaktiviert wird, wenn das Anhängerfahrzeug an ein Zugfahrzeug angekuppelt sowie die Feststellbremse im Zugfahrzeug eingelegt ist.

Vorzugsweise kann das Verfahren zum Aktivieren eines Wegfahrschutzes für ein mit einem Zugfahrzeug kuppelbares Anhängerfahrzeug, mit einem elektronischen Anhängerbremssystem und einer davon angesteuerten, eine Feststellbremse aufweisenden Bremsanlage, wobei das elektronische Anhängerbremssystem mittels einer Steuereinrichtung ansteuerbar ist, um den Wegfahrschutz durch Ansteuern der Bremsanlage zu bewirken und um das Anhängerfahrzeug gegen ein unberechtigtes Entfernen mittels der Bremsanlage einzubremsen, folgende Schritte umfassen:
- Eingeben eines Aktivierungsbefehls in eine fahrzeugferne Arbeitsstation,
- Übertragen des Aktivierungsbefehls an eine Telematikzentrale,
- drahtloses Senden des Aktivierungsbefehls von der Telematikzentrale an einen GSM- oder GPRS-Empfänger am Anhängerfahrzeug und Weiterleiten des Aktivierungsbefehls an die Steuereinrichtung,
- Speichern des Aktivierungsbefehls in der Steuereinrichtung,
- Sensieren, ob das Anhängerfahrzeug an ein Zugfahrzeug angekuppelt oder abgekuppelt ist,
- Sensieren, ob sich das Anhängerfahrzeug bewegt oder stillsteht, und
- Aktivieren des elektronischen Bremssystems, um die Feststellbremse der Bremsanlage dauerhaft in den Zustand "Bremse geschlossen" zu versetzen, wenn das Anhängerfahrzeug vom Zugfahrzeug abgekuppelt ist und stillsteht.

Die Abkürzung GSM steht für "Global System For Mobile Communication", während die Abkürzung GPRS "General Packet Radio Service" bedeutet.

Durch diese Verfahrensschritte ist gewährleistet, dass im Normalbetrieb immer dann, wenn der Fahrzeugführer die Feststellbremse in einem Zugfahrzeug bei Fahrzeugstillstand in seine Schließrichtung betätigt, parallel zum Einbremsen über die Betriebsbremsanlage auch der Wegfahrschutz durch das elektronische Anhängerbremssystem betätigt wird. Damit ist das gesamte Fahrzeug eingebremst und lässt sich ohne Lösen des Wegfahrschutzes nicht bewegen. Wenn der Fahrzeugführer die Feststellbremse im Zugfahrzeug normal löst, wird der Wegfahrschutz durch das elektronische Anhängerbremssystem wieder freigegeben, und der Fahrer merkt nichts von der Bremsbetätigung am Anhängerfahrzeug.

Wenn das Telematiksystem, bestehend aus der hinsichtlich GSM- oder GPRS- Nachrichten sendefähigen Telematikzentrale und dem GSM- oder GPRS-Empfänger am Anhängerfahrzeug, im Anhängerfahrzeug einen Aktivierungsbefehl erhält, wird diese Anforderung zunächst in der mit dem Empfänger verbundenen Steuereinrichtung gespeichert. So lange das Fahrzeug noch in Bewegung ist, erfolgt keine Aktivierung des elektronischen Anhängerbremssystems, um zu vermeiden, dass eine Gefährdung des öffentlichen Straßenverkehrs durch Abbremsen des Anhängerfahrzeugs eintritt. Erst nachdem das Anhängerfahrzeug normal vom Zugfahrzeug abgekuppelt ist und sich auch nicht mehr bewegt, woraus sich eindeutig ergibt, dass das Anhängerfahrzeug an einem zulässigen Ort ohne Gefährdung des öffentlichen Straßenverkehrs geparkt ist, wird der Wegfahrschutz durch den Aktivierungsbefehl aktiviert und die Feststellbremse des Anhängerfahrzeugs dauerhaft in den Zustand "Bremse geschlossen" versetzt.

Nur dann, wenn das Anhängerfahrzeug an ein Zugfahrzeug angekuppelt ist, alle dafür erforderlichen Verbindungen zwischen dem Zugfahrzeug und dem Anhängerfahrzeug hergestellt sind, und die Feststellbremse des Zugfahrzeug in Schließrichtung betätigt ist, lässt sich der Wegfahrschutz automatisch oder durch ein Deaktivierungssignal vom Telematiksystem deaktivieren. Wenn dann die Feststellbremse des Zugfahrzeugs gelöst wird, löst sich auch die Feststellbremse des Anhängerfahrzeugs, ohne dass der Wegfahrschutz eingreift, und das Fahrzeug aus dem Zugfahrzeug und dem Anhängerfahrzeug lässt sich wieder normal bewegen.

Demnach kann für das Deaktivieren des Wegfahrschutzes der folgende Befehlsablauf vorgesehen:
- Eingeben eines Deaktivierungsbefehls in eine fahrzeugferne Arbeitsstation,
- Übertragen des Deaktivierungsbefehls an eine Telematikzentrale,
- drahtloses Senden des Deaktivierungsbefehls von der Telematikzentrale an einen GSM- oder GPRS-Empfänger am Anhängerfahrzeug und Weiterleiten des Deaktivierungsbefehls an die Steuereinrichtung,
- Sensieren, ob das Anhängerfahrzeug an ein Zugfahrzeug angekuppelt ist,
- Sensieren, ob die Feststellbremse im Zugfahrzeug in Schließrichtung betätigt ist,
- Deaktivieren des Aktivierungsbefehls, wenn diese Bedingungen erfüllt sind,
- Versetzen der Bremsanlage Zustand "Bremse gelöst".

Gemäß einer Weiterbildung der Erfindung kann vorgesehen sein, dass das elektronische Anhängerbremssystem die Bremsanlage des Anhängerfahrzeugs nur dann durch Deaktivieren des Aktivierungsbefehls in den Zustand "Bremse gelöst" versetzt, wenn das Zugfahrzeug als ein für das Ziehen des Anhängerfahrzeugs autorisiertes Zugfahrzeug erkannt wird.

Der Begriff "autorisiertes Zugfahrzeug" bezeichnet ein Zugfahrzeug, welches technisch in der Lage sowie aufgrund einer diesem zugeordneten Berechtigung dafür vorgesehen ist, ein bestimmtes Anhängerfahrzeug zu bewegen bzw. zu ziehen. Diese Berechtigung des autorisierten Zugfahrzeugs kann sich auf nur ein spezielles Anhängerfahrzeug oder auf eine Mehrzahl von Anhängerfahrzeugen beziehen, wie weiter unten noch ausgeführt wird.

Bevorzugt kann der Aktivierungsbefehl daher spezifisch bezüglich eines autorisierten Zugfahrzeugs und/oder bezüglich eines definierten Anhängerfahrzeugs kodierbar sein, so dass sich das Anhängerfahrzeug nur durch ein bestimmtes autorisiertes Zugfahrzeug bewegen lässt, um beispielsweise stets das zutreffende Zugfahrzeug mit dem Anhängerfahrzeug zu kuppeln, welches das Anhängerfahrzeug an einen vorbestimmten Zielort bringt. Derartige spezifische Aktivierungsbefehle können für eine ganze Flotte von Zugfahrzeugen und Anhängerfahrzeugen kodiert sein, die beispielsweise zu einem Logistikunternehmen gehört.

Der Aktivierungsbefehl kann durch einen Disponenten in die genannte fahrzeugferne Arbeitsstation eingegeben werden, er kann aber auch durch die Telematikzentrale oder den GSM- oder GPRS-Empfänger automatisch generiert werden, wenn das Anhängerfahrzeug an einem vorbestimmten geographischen Ort abgestellt ist. Die Anwesenheit des Anhängerfahrzeugs an diesem geographischen Ort kann beispielsweise mittels einer satellitengestützten Navigationseinrichtung bestimmt werden.

Das Sensieren, ob das Anhängerfahrzeug an ein Zugfahrzeug angekuppelt oder vom einem solchen abgekuppelt ist, kann mittels eines Koppelsensors an einem Kupplungskopf für einen Vorratsdruck oder in einer pneumatischen Leitung zwischen dem genannten Kupplungskopf und dem Anhängerbremsventil erfolgen, während das Sensieren, ob sich das Anhängerfahrzeug bewegt oder stillsteht, durch wenigstens einen Radumdrehungssensor an einem Fahrzeugrad erfolgen kann.

Die eingangs erwähnte Aufgabe wird vorrichtungsbezogen gelöst durch ein System zum Betätigen eines Wegfahrschutzes für ein mit einem Zugfahrzeug kuppelbares Anhängerfahrzeug, mit einem elektronischen Anhängerbremssystem und einer davon angesteuerten, eine Feststellbremse aufweisenden Bremsanlage, wobei das elektronische Anhängerbremssystem mittels einer Steuereinrichtung ansteuerbar ist, um den Wegfahrschutz durch Ansteuern der Bremsanlage zu bewirken und das Anhängerfahrzeug gegen ein unberechtigtes Entfernen mittels der Bremsanlage einzubremsen.

Gemäß der Erfindung ist dieses System gekennzeichnet durch eine mit einer Telematikzentrale verbundene fahrzeugferne Arbeitsstation zum Eingeben und/oder Programmieren eines Aktivierungsbefehls, eine Steuereinrichtung am Anhängerfahrzeug, die mit einem GSM- oder GPRS-Empfänger sowie mit wenigstens einen Radumdrehungssensor am Anhängerfahrzeug und einem Koppelsensor zur Sensierung des Ankoppelzustandes des Anhängerfahrzeugs über Sensor- oder Datenleitungen direkt oder indirekt verbunden ist, wobei die Telematikzentrale dazu eingerichtet ist, den Aktivierungsbefehl drahtlos an den GSM- oder GPRS-Empfänger zu übertragen, der GSM- oder GPRS-Empfänger dazu eingerichtet ist, den Aktivierungsbefehl von der Telematikzentrale zu empfangen und an die Steuereinrichtung zur dortigen Speicherung und Weiterverarbeitung weiterzuleiten, die Steuereinrichtung dazu eingerichtet ist, ein Signal von dem Koppelsensor zu empfangen, ob das Anhängerfahrzeug an ein Zugfahrzeug angekuppelt oder von diesem abgekuppelt ist, die Steuereinrichtung dazu eingerichtet ist ein Signal von dem Radumdrehungssensor zu empfangen, ob sich das Anhängerfahrzeug bewegt oder stillsteht, und die Steuereinrichtung dazu eingerichtet ist, Signale an das elektronische Anhängerbremssystem des Anhängerfahrzeugs weiterzuleiten, um den Wegfahrschutz durch Schließen der Feststellbremse zu bewirken, wenn das Anhängerfahrzeug vom Zugfahrzeug abgekuppelt ist und stillsteht.

Der Kuppelsensor kann beispielsweise an einem Kupplungskopf für einen pneumatischen Vorratsdruck oder in einer pneumatischen Leitung zwischen dem Kupplungskopf und dem Anhängerbremsventil angeordnet sein, und den daran anliegenden Druck sensieren.

Des Weiteren kann die Bremsanlage ein bistabiles, elektromagnetisch umschaltbares Stromstoßventil aufweisen, das zwei stabile Betriebszustände einzunehmen kann, in denen das Stromstoßventil jeweils nach dem Abschalten der Energiezufuhr verbleibt, wobei in einem ersten Betriebszustand ein Federspeicherbremszylinder der Feststellbremse entlüftet ist.

Schließlich wird die gestellte Aufgabe gelöst mit Hilfe einer Steuereinrichtung zum Betätigen eines Wegfahrschutzes für ein mit einem Zugfahrzeug kuppelbares Anhängerfahrzeug, mit einem elektronischen Anhängerbremssystem und einer davon ansteuerbaren, eine Feststellbremse aufweisenden Bremsanlage, wobei das elektronische Anhängerbremssystem von der Steuereinrichtung ansteuerbar ist, um den Wegfahrschutz durch Ansteuern der Bremsanlage zu bewirken und das Anhängerfahrzeug gegen ein unberechtigtes Entfernen mittels der Bremsanlage einzubremsen. Die Steuereinrichtung ist gemäß der Erfindung derartig ausgebildet, dass sie einen von einem GSM- oder GPRS-Empfänger empfangen Aktivierungsbefehl entgegennehmen, abspeichern und verarbeiten kann, dass sie ein von einem Radumdrehungssensor am Anhängerfahrzeug ermitteltes Drehzahlsignal, ob sich das Anhängerfahrzeug bewegt oder stillsteht, direkt oder indirekt empfangen und verarbeiten kann, dass sie ein von einem Koppelsensor am Anhängerfahrzeug generiertes Signal, ob das Anhängerfahrzeug an ein Zugfahrzeug angekuppelt oder abgekuppelt ist, direkt oder indirekt empfangen und verarbeiten kann, und dass sie ein Signal an das elektronische Anhängerbremssystem des Anhängerfahrzeugs weiterleiten kann, um den Wegfahrschutz durch Schließen der Feststellbremse zu bewirken, wenn das Anhängerfahrzeug vom Zugfahrzeug abgekuppelt ist und stillsteht.

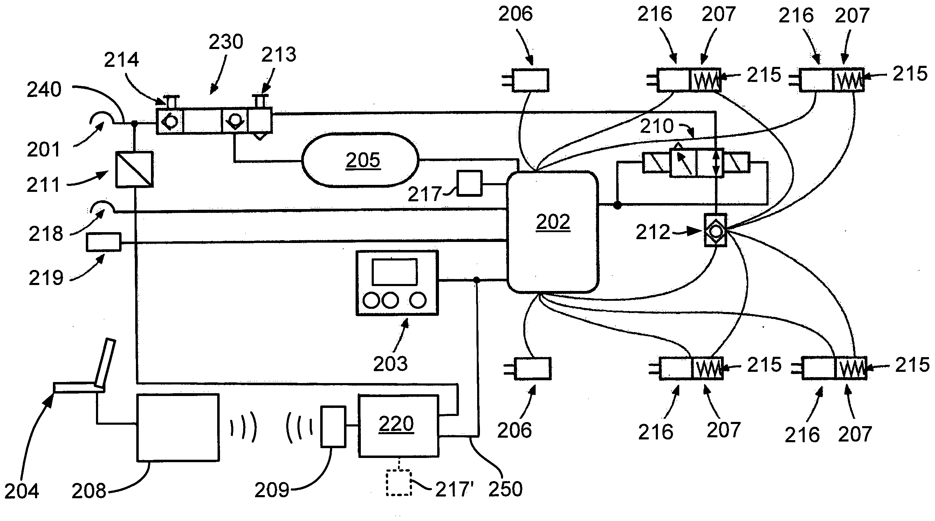

Die Erfindung wird nachstehend anhand eines in der beigefügten Zeichnung dargestellten Ausführungsbeispiels weiter erläutert.

Die einzige Zeichnungsfigur zeigt eine schematische Darstellung eines Systems zum Aktivieren eines Wegfahrschutzes für ein Anhängerfahrzeug. Gemäß diesem Ausführungsbeispiel kann ein Anhängerfahrzeug, welches das erfindungsgemäße System aufweist, über einen Kupplungskopf 201 mittels einer Leitung für einen pneumatischen Vorratsdruck mit einem Zugfahrzeug gekoppelt sein. Bei dem Zugfahrzeug kann es sich beispielsweise um einen Sattelschlepper oder um einen Lastkraftwagen und bei dem Anhängerfahrzeug um einen Sattelauflieger oder um einen Deichselanhänger handeln.

Der Vorratsdruck wird über ein Anhängerbremsventil 230 zu einem elektronischen Anhängerbremssystem 202 geleitet. Das Anhängerbremsventil 230 verfügt über einen ersten Betätigungsknopf 213 zur manuellen Aktivierung bzw. zum Einlegen einer Feststellbremse des Anhängerfahrzeugs. Ein zweiter Betätigungsknopf 214 ist zum manuellen Lösen der automatischen Bremse bei abgekoppeltem Anhängerfahrzeug vorgesehen. Der Vorratsdruck für einen Vorratsdruckbehälter 205 gelangt über den Kupplungskopf 201 und ein im Anhängerbremsventil 230 integriertes Rückschlagventil zu einem Vorratsdruckbehälter 205.

Über eine pneumatische Steuerleitung 218 lässt sich das Anhängerfahrzeug bzw. sein Anhängerbremssystem 202 pneumatisch sowie über eine elektrische Bremsleitung 219 elektrisch ansteuern. Durch das elektronische Anhängerbremssystem 202 sind Komponenten 206 der Betriebsbremse und entsprechende Komponenten 216 für die Betätigung der Betriebsbremse in mehreren Kombibremszylindern 207 ansteuerbar. Derartige Kombibremszylinder 207 weisen einen Federspeicherbremszylinder 215 auf und sind beispielsweise aus der DE 1 203 141 A im Einzelnen bekannt. Die Federspeicherbremszylinder 215 sind Bestandteile der Feststellbremse des Anhängerfahrzeugs, welche kein gesondertes Bezugszeichen in der einzigen Zeichnungsfigur hat.

In der Bremsanlage ist ein Überlastschutzventil 212 angeordnet, das in diesem Beispiel aus einem 3/2-Wegeventil besteht. Von diesem Überlastschutzventil 212 wird der pneumatische Druck zu den Federspeicherbremszylindern 215 der Kombibremszylinder 207 verteilt.

Die Feststellbremse wird durch eine Betätigung des Betätigungsknopfes 213 in ihre Schließstellung gebracht. Dabei werden die Federspeicherbremszylinder 215 entlüftet, so dass die darin integrierten Federn die Radbremsen in Schließrichtung betätigen. Wird bei entlüfteten Federspeicherbremszylindern 215 die Betriebsbremse betätigt, gelangt der Bremsdruck über das Überlastschutzventil 212 in die Federspeicherbremszylinder 215 der Kombizylinder 207 und baut dort proportional zur aufgebauten Bremskraft im Betriebsbremsteil 216 der Kombibremszylindern 207 die Kraft in den Federspeicherbremszylindern 215 ab, so dass keine Kraftaddition stattfindet.

Zwischen dem Anhängerbremsventil 230 und den Federspeicherbremszylindern 215 der Kombibremszylinder 207 ist ein bistabiles Stromstoßventil 210 angeordnet, das zwei Schaltstellungen einnehmen kann, zwischen denen es mittels zweier
Elektromagnete hin und her schaltbar ist. Wenn sich das bistabile Stromstoßventil 210 in einem der beiden stabilen Zustände befindet, wird dieser Zustand auch dann beibehalten, wenn das bistabile Stromstoßventil 210 von der Energieversorgung getrennt ist. Zur Umschaltung von einem ersten stabilen Zustand in einen zweiten stabilen Zustand des bistabilen Stromstoßventils 210 ist lediglich ein kurzer Stromstoß oder Stromimpuls erforderlich. Eine kontinuierliche Versorgung mit Strom ist ebenfalls möglich, aber nicht zwingend erforderlich, um zwischen den beiden Zuständen zu wechseln, oder um einen der beiden Zustände beizubehalten.

Im dargestellten Schaltzustand des bistabilen Stromstoßventils 210 ist das Anhängerbremsventil 230 mit dem Überlastschutzventil 212 verbunden, dem Druckluft entweder vom Kupplungskopf 201 oder vom Vorratsdruckbehälter 205 zugeführt wird. Auf diese Weise bleibt oder wird Druckluft in die Federspeicherbremszylinder 215 der Kombibremszylinder 207 geleitet und die Feststellbremse gelöst. Wenn durch einen Stromstoß das bistabile Stromstoßventil 210 in den zweiten stabilen Zustand versetzt wird, wird die Verbindungsleitung zum Überlastschutzventil 212 und damit auch die Federspeicherbremszylinder 215 entlüftet, die an das Überlastschutzventil 212 angeschlossen sind, so dass die Feststellbremse eingelegt wird.

Zum Aktivieren des Wegfahrschutzes des Anhängerfahrzeugs dient ein System, das eine fahrzeugferne, beispielsweise ortsfeste Arbeitsstation 204 zum Eingeben von Daten und/oder zum Programmieren durch eine Bedienungsperson aufweist, die mit einer Telematikzentrale 208 verbundenen ist. Die Telematikzentrale 208 weist einen Sender auf, mit dem sie Nachrichten bzw. Signale an einen anhängerseitigen GSM- oder GPRS-Empfänger 209 senden kann.

Der GSM- oder GPRS-Empfänger 209 ist über eine Datenleitung mit einer Steuereinrichtung 220 verbunden, die dazu eingerichtet ist, eine von dem GSM- oder GPRS-Empfänger 209 empfangene und zu der Steuereinrichtung 220 geleitete Nachricht zu speichern sowie zu verarbeiten. Die Steuereinrichtung 220 ist außerdem über eine Datenleitung 250 mit dem elektronischen Anhängerbremssystem 202 verbunden sowie über eine Sensorleitung mit einem Koppelsensor 211 verbunden, der in einer pneumatischen Druckleitung 240, welche sich vom Kupplungskopf 201 für Vorratsdruck zu dem Anhängerbremsventil 230 erstreckt, den dort anliegenden Druck sensiert. Ist der Kupplungskopf 201 mit dem Zugfahrzeug verbunden, dann liegt am Anhängerbremsventil 230 der volle Druck der Bremsanlage an, welches von dem Koppelsensor 211 an die Steuereinrichtung 220 gemeldet wird. Daraus wird dort die Schlussfolgerung gezogen, dass das Anhängerfahrzeug an das Zugfahrzeug angekoppelt ist.

Des Weiteren ist erkennbar, dass die Steuereinrichtung 220 mit einem gestrichelt gezeichneten Radumdrehungssensor 217' verbunden sein kann, der an die Steuereinrichtung 220 ein Signal übermittelt, ob sich die Räder des Anhängerfahrzeuges drehen oder nicht, das heißt, ob sich das Anhängerfahrzeug bewegt oder stillsteht. In einer
ebenfalls dargestellten bevorzugten Ausführungsform ist der Radumdrehungssensor 217 jedoch über eine Sensorleitung mit dem elektronischen Anhängerbremssystem 202 verbunden, welches die ermittelten Drehzahlwerte über die erwähnte Datenleitung 250 an die Steuereinrichtung 220 weiterleitet.

Wenn ein Lastzug, bestehend aus einem autorisierten Zugfahrzeug und einem Anhängerfahrzeug, in Betrieb genommen wird, indem das Anhängerfahrzeug an das Zugfahrzeug angekoppelt wird und die erforderlichen Verbindungen zwischen dem Zugfahrzeug und dem Anhängerfahrzeug über den Kupplungskopf 201, die pneumatische Steuerleitung 218 und die elektrische Bremsleitung 219 hergestellt sind, sowie von der Arbeitsstation 204 ein Deaktivierungsbefehl über die Telematikzentrale 208 drahtlos an den GSM- oder GPRS-Empfänger 209 übermittelt wurde, kann ein Fahrzeugführer an sich abfahren, wenn er die Feststellbremse im Zugfahrzeug bei Fahrzeugstillstand löst.

Da die Bremsen des Anhängerfahrzeugs vor dessen Ankuppeln an das Zugfahrzeug geschlossen waren und nun auch noch sind, befindet sich hierzu das bistabile Stromstoßventil 210 in seiner nicht dargestellten zweiten Schaltstellung, bei der die Federspeicherbremszylinder 215 der Kombizylinder 207 entlüftet sind, so dass das Anhängerfahrzeug eingebremst ist. Zum Lösen der Bremsen des Anhängerfahrzeugs wird das bistabile Stromstoßventil 210 auf der Grundlage des Deaktivierungsbefehls von der Arbeitsstation 204 durch einen Steuerbefehl des elektronischen Anhängerbremssystems 202 in seine in der einzigen Zeichnung dargestellte Schaltstellung gebracht. Hierdurch werden die Federspeicherbremszylinder 215 belüftet und die Bremsen des Anhängerfahrzeugs dadurch gelöst.

Wenn der Fahrzeugführer das Anhängerfahrzeug an das Zugfahrzeug ankuppelt, bevor ein Aktivierungsbefehl über die Telematikzentrale 208 gesendet wurde, wird die Bremsanlage des Anhängerfahrzeugs in den Zustand "Gelöst" versetzt, sobald der Fahrzeugführer die Feststellbremse löst.

Wenn zu irgendeinem späteren Zeitpunkt das Anhängerfahrzeug von dem Zugfahrzeug abgekoppelt wird und die Verbindungen des Kupplungskopfs 201, der pneumatischen Steuerleitung 218 und der elektrischen Bremsleitung 219 zum Zugfahrzeug gelöst werden, übermittelt der Koppelsensor 211 ein entsprechendes Signal an die Steuereinrichtung 220. Außerdem übermittelt der Radumdrehungssensor 217 ein Signal an die Steuereinrichtung 220, dass das Anhängerfahrzeug zum Stillstand gekommen ist. Da bis zu diesem Zeitpunkt eine Verbindung zu einem autorisierten Zugfahrzeug bestanden hat, ergibt sich aus den Signalen des Koppelsensors 211 und des Radumdrehungssensors 217, dass das Anhängerfahrzeug ohne Gefährdung des Straßenverkehrs abgestellt wurde, und ein in der Steuereinrichtung 220 gespeicherter Aktivierungsbefehl wird als Folge davon an das elektronische Anhängerbremssystem 202 geleitet. Dieses erzeugt dann einen Steuerbefehl zum Umschalten des bistabilen Stromstoßventils 210 in die in der Zeichnung nicht dargestellte Schaltstellung, so dass die Federspeicherbremszylinder 215 für die Bremsen der Räder des Anhängerfahrzeugs entlüftet und die Bremsen durch Federkraft geschlossen werden.

Wenn nun das Anhängerfahrzeug an ein nicht autorisiertes Zugfahrzeug angekoppelt wird und der Kupplungskopf 201, die pneumatische Steuerleitung 218 und die elektrische Bremsleitung 219 mit dem nicht autorisierten Zugfahrzeug verbunden werden, bleibt die Feststellbremse des Anhängerfahrzeugs eingelegt, da das elektronische Anhängerbremssystem 202 auf Signale von dem nicht autorisierten Zugfahrzeug reagiert und das bistabile Stromstoßventil 210 in der Entlüftungsstellung verharrt, so dass die Feststellbremse des Anhängerfahrzeugs geschlossen bleibt und sich das Anhängerfahrzeug nicht oder nur schwer bewegen lässt.

Erst wenn ein Deaktivierungsbefehl in die Arbeitsstation 204 eingegeben oder automatisch generiert wird und über die Telematikzentrale 208, den GSM- oder GPRS-Empfänger 209 und die Steuereinrichtung 220 an das elektronische Anhängerbremssystem 202 gelangt, wird nach dem Ankoppeln des Anhängerfahrzeugs an ein entsprechendes autorisiertes Zugfahrzeug das bistabile Stromstoßventil 210 in die in der Zeichnung dargestellte Stellung zurückgeschaltet, so dass die Federspeicherbremszylinder 215 mit Druckluft beaufschlagt werden und die Feststellbremse gelöst wird.

Eine zusätzliche Voraussetzung zum Lösen der Wegfahrsperre für das Anhängerfahrzeug kann noch in der Weise vorgesehen sein, dass die Federspeicherbremszylinder 215 nur dann mit Druckluft beaufschlagt werden, um die Feststellbremse zu lösen, wenn die Feststellbremse im Zugfahrzeug eingelegt ist und der Druck am Kupplungskopf 201 mehr als 6,5 bar beträgt, um ein Wegrollen zu verhindern. Dieser Druck wirkt auf die Komponenten 206 und 216 der Betriebsbremse der Kombizylinder 207. Wird nun die Feststellbremse des Zugfahrzeugs gelöst, gelangt der Druck am Kupplungskopf 201 über das bistabile Stromstoßventil 210 in die Federspeicherbremszylinder 215, und der Lastzug bestehend aus dem Zugfahrzeug und dem Anhängerfahrzeug lässt sich wieder bewegen.

Eine zusätzliche Betätigung der Wegfahrsperre ist auch über eine hier zusätzlich am Anhängerfahrzeug angebrachte Bedienvorrichtung 203 möglich, mittels der ein kodierter Zahlenwert (PIN) in die Bedienvorrichtung 203 eingegeben und/oder eine Magnetkarte und/oder eine Chipkarte eingesteckt wird. Dadurch ist es nach Lösen der Wegfahrsperre möglich, ein solches Anhängerfahrzeug beispielsweise auf einem Betriebshof durch ein Rangierfahrzeug zu bewegen.

## Patentansprüche

1. Verfahren zum Betätigen eines Wegfahrschutzes für ein mit einem Zugfahrzeug kuppelbares Anhängerfahrzeug, mit einem elektronischen Anhängerbremssystem (202) und einer davon angesteuerten, eine Feststellbremse aufweisenden Bremsanlage (206, 207, 215, 216), wobei das elektronische Anhängerbremssystem (202) mittels einer Steuereinrichtung (220) ansteuerbar ist, um den Wegfahrschutz durch Ansteuern der Bremsanlage (206, 207, 215, 216) zu bewirken und um das Anhängerfahrzeug gegen ein unberechtigtes Entfernen mittels der Bremsanlage (206, 207, 215, 216) einzubremsen, **dadurch gekennzeichnet, dass** das elektronische Anhängerbremssystem (202) die Bremsanlage (206, 207, 215, 216) in den Zustand "Bremse geschlossen" oder "Bremse gelöst" versetzt, wenn eine Feststellbremse in einem Zugfahrzeug durch einen Fahrzeugführer in Schließrichtung oder Lösrichtung betätigt wird, wobei der Wegfahrschutz in der Weise aktiviert wird, dass das elektronische Anhängerbremssystem (202) nur dann ferngesteuert durch die Steuereinrichtung angesteuert wird, um die Feststellbremse der Bremsanlage (206, 207, 215, 216) dauerhaft in den Zustand "Bremse geschlossen" zu versetzen, wenn das Anhängerfahrzeug vom Zugfahrzeug abgekuppelt und abgestellt ist, und bei dem der Wegfahrschutz deaktiviert wird, wenn das Anhängerfahrzeug an ein Zugfahrzeug angekuppelt sowie die Feststellbremse im Zugfahrzeug eingelegt ist.

2. Verfahren zum Aktivieren eines Wegfahrschutzes für ein mit einem Zugfahrzeug kuppelbares Anhängerfahrzeug, mit einem elektronischen Anhängerbremssystem (202) und einer davon angesteuerten, eine Feststellbremse aufweisenden Bremsanlage (206, 207, 215, 216), wobei das elektronische Anhängerbremssystem (202) mittels einer Steuereinrichtung (220) ansteuerbar ist, um den Wegfahrschutz durch Ansteuern der Bremsanlage (206, 207, 215, 216) zu bewirken und um das Anhängerfahrzeug gegen ein unberechtigtes Entfernen mittels der Bremsanlage (206, 207, 215, 216) einzubremsen, nach Anspruch 1, mit den Schritten:
- Eingeben eines Aktivierungsbefehls in eine fahrzeugferne Arbeitsstation (204),
- Übertragen des Aktivierungsbefehls an eine Telematikzentrale (208),
- drahtloses Senden des Aktivierungsbefehls von der Telematikzentrale (208) an einen GSM- oder GPRS-Empfänger (209) am Anhängerfahrzeug und Weiterleiten des Aktivierungsbefehls an die Steuereinrichtung (220),
- Speichern des Aktivierungsbefehls in der Steuereinrichtung (220),
- Sensieren, ob das Anhängerfahrzeug an ein Zugfahrzeug angekuppelt oder abgekuppelt ist,
- Sensieren, ob sich das Anhängerfahrzeug bewegt oder stillsteht, und
- Aktivieren des elektronischen Anhängerbremssystems (202), um die Feststellbremse der Bremsanlage (206, 207, 215, 216) dauerhaft in den Zustand "Bremse geschlossen" zu versetzen, wenn das Anhängerfahrzeug vom Zugfahrzeug abgekuppelt ist und stillsteht.

3. Verfahren zum Deaktivieren eines Wegfahrschutzes nach Anspruch 1 oder 2 mit den Schritten:
- Eingeben eines Deaktivierungsbefehls in eine fahrzeugferne Arbeitsstation (204),
- Übertragen des Deaktivierungsbefehls an eine Telematikzentrale (208),
- drahtloses Senden des Deaktivierungsbefehls von der Telematikzentrale (208) an einen GSM- oder GPRS-Empfänger (209) am Anhängerfahrzeug und Weiterleiten des Deaktivierungsbefehls an die Steuereinrichtung (220),
- Sensieren, ob das Anhängerfahrzeug an ein Zugfahrzeug angekuppelt ist,
- Sensieren, ob die Feststellbremse im Zugfahrzeug in Schließrichtung betätigt ist,
- Deaktivieren des Aktivierungsbefehls, wenn diese Bedingungen erfüllt sind,
- Versetzen der Bremsanlage (206, 207, 215, 216) Zustand "Bremse gelöst".

4. Verfahren nach einem der Ansprüche 1 bis 3, **dadurch gekennzeichnet, dass** das elektronische Anhängerbremssystem (202) die Bremsanlage (206, 207, 215, 216) des Anhängerfahrzeugs nur dann durch Deaktivieren des Aktivierungsbefehls in den Zustand "Bremse gelöst" versetzt, wenn das Zugfahrzeug als ein für das Ziehen des Anhängerfahrzeugs autorisiertes Zugfahrzeug erkannt wird.

5. Verfahren nach Anspruch 4, **dadurch gekennzeichnet, dass** der Aktivierungsbefehl spezifisch bezüglich eines autorisierten Zugfahrzeugs und/oder bezüglich eines definierten Anhängerfahrzeugs kodiert wird.

6. Verfahren nach einem der Ansprüche 4 oder 5, **dadurch gekennzeichnet, dass** spezifische Aktivierungsbefehle für eine Flotte von Zugfahrzeugen und Anhängerfahrzeugen kodiert werden.

7. Verfahren nach einem der Ansprüche 1 bis 6, **dadurch gekennzeichnet, dass** der Aktivierungsbefehl automatisch generiert wird, wenn das Anhängerfahrzeug an einem vorbestimmten geographischen Ort abgestellt ist.

8. Verfahren nach einem der Ansprüche 1 bis 7, **dadurch gekennzeichnet, dass** das Sensieren, ob das Anhängerfahrzeug an ein Zugfahrzeug angekuppelt oder von diesem abgekuppelt ist, mittels eines Koppelsensors (211) an einem Kupplungskopf (201) für einen Vorratsdruck oder in einer pneumatischen Leitung (240) zwischen dem genannten Kupplungskopf (201) und dem Anhängerbremsventil (230) erfolgt.

9. Verfahren nach einem der Ansprüche 1 bis 8, **dadurch gekennzeichnet, dass** das Sensieren, ob sich das Anhängerfahrzeug bewegt oder stillsteht, durch wenigstens einen Radumdrehungssensor (217) erfolgt.

10. System zum Betätigen eines Wegfahrschutzes für ein mit einem Zugfahrzeug kuppelbares Anhängerfahrzeug, mit einem elektronischen Anhängerbremssystem (202) und einer davon angesteuerten, eine Feststellbremse aufweisenden Bremsanlage (206, 207, 215, 216), wobei das elektronische Anhängerbremssystem (202) mittels einer Steuereinrichtung (220) ansteuerbar ist, um den Wegfahrschutz durch Ansteuern der Bremsanlage (206, 207, 215, 216) zu bewirken und das Anhängerfahrzeug gegen ein unberechtigtes Entfernen mittels der Bremsanlage (206, 207, 215, 216) einzubremsen, zur Durchführung des Verfahrens nach einem der Ansprüche 1 bis 8, **gekennzeichnet durch** eine mit einer Telematikzentrale (208) verbundene fahrzeugferne Arbeitsstation (204) zum Eingeben und/oder Programmieren eines Aktivierungsbefehls, eine Steuereinrichtung (220) am Anhängerfahrzeug, die mit einem GSM- oder GPRS-Empfänger (209), wenigstens einen Radumdrehungssensor (217) am Anhängerfahrzeug und einen Koppelsensor (211) am Anhängerfahrzeug über Sensor- oder Datenleitungen direkt oder indirekt verbunden ist, wobei die Telematikzentrale (208) dazu eingerichtet ist, den Aktivierungsbefehl drahtlos an den GSM- oder GPRS-Empfänger (209) zu übertragen, der GSM- oder GPRS-Empfänger (209) dazu eingerichtet ist, den Aktivierungsbefehl von der Telematikzentrale (208) zu empfangen und an die Steuereinrichtung (220) zur dortigen Speicherung und Weiterverarbeitung weiterzuleiten, und die Steuereinrichtung (220) dazu eingerichtet ist, ein Signal von dem Koppelsensor (211) zu empfangen, ob das Anhängerfahrzeug an ein Zugfahrzeug angekuppelt oder abgekuppelt ist, ein Signal von dem Radumdrehungssensor (217) zu empfangen, ob sich das Anhängerfahrzeug bewegt oder stillsteht, sowie dazu eingerichtet ist, ein Signal an das elektronische Anhängerbremssystem (202) des Anhängerfahrzeugs weiterzuleiten, um den Wegfahrschutz **durch** Schließen der Feststellbremse zu bewirken, wenn das Anhängerfahrzeug vom Zugfahrzeug abgekuppelt ist und stillsteht.

11. System nach Anspruch 10, **dadurch gekennzeichnet, dass** der Koppelsensor (211) an einem Kupplungskopf (201) für einen pneumatischen Vorratsdruck oder in einer pneumatischen Leitung (240) zwischen dem Kupplungskopf (201) und dem Anhängerbremsventil (230) angeordnet ist, und den daran anliegenden Druck sensiert.

12. System nach Anspruch 10 oder 11, **dadurch gekennzeichnet, dass** die Bremsanlage (206, 207, 215, 216) ein bistabiles, elektromagnetisch umschaltbares Stromstoßventil (210) aufweist, das zwei stabile Betriebszustände einnehmen kann, in denen das Stromstoßventil (210) jeweils nach dem Abschalten der Energiezufuhr verbleibt, wobei in einem ersten Betriebszustand einen Federspeicherbremszylinder (215) entlüftet ist.

13. Steuereinrichtung (220) zum Betätigen eines Wegfahrschutzes für ein mit einem Zugfahrzeug kuppelbares Anhängerfahrzeug, mit einem elektronischen Anhängerbremssystem (202) und einer davon ansteuerbaren, eine Feststellbremse aufweisenden Bremsanlage (206, 207, 215, 216), wobei das elektronische Anhängerbremssystem (202) von der Steuereinrichtung (220) ansteuerbar ist, um den Wegfahrschutz durch Ansteuern der Bremsanlage (206, 207, 215, 216) zu bewirken und das Anhängerfahrzeug gegen ein unberechtigtes Entfernen mittels der Bremsanlage (206, 207, 215, 216) einzubremsen, **dadurch gekennzeichnet, dass** die Steuereinrichtung (220) derartig ausgebildet ist, dass sie einen von einem GSM- oder GPRS-Empfänger (209) empfangenen Aktivierungsbefehl entgegennehmen, abspeichern und verarbeiten kann, dass sie ein von einem Radumdrehungssensor (217) am Anhängerfahrzeug ermitteltes Drehzahlsignal, ob sich das Anhängerfahrzeug bewegt oder stillsteht, direkt oder indirekt empfangen und verarbeiten kann, dass sie ein von einem Koppelsensor (211) am Anhängerfahrzeug generiertes Signal, ob das Anhängerfahrzeug an ein Zugfahrzeug angekuppelt oder abgekuppelt ist, direkt oder indirekt empfangen und verarbeiten kann, und dass sie Signale an das elektronische Anhängerbremssystem (202) des Anhängerfahrzeugs weiterleiten kann, um den Wegfahrschutz durch Schließen der Feststellbremse zu bewirken, wenn das Anhängerfahrzeug vom Zugfahrzeug abgekuppelt ist und stillsteht.

## Claims

1. Method for actuating an immobilizer for a trailer vehicle which can be coupled to a towing vehicle, with an electronic trailer braking system (202) and with a brake assembly (206, 207, 215, 216) driven by said trailer braking system (202) and exhibiting a parking brake, wherein the electronic trailer braking system (202) can be driven by means of a control device (220) in order to bring about the immobilization by driving the brake assembly (206, 207, 215, 216) and in order to apply the brakes on the trailer vehicle by means of the brake assembly (206, 207, 215, 216) so as to counter unauthorized removal, **characterized in that** the electronic trailer braking system (202) places the brake assembly (206, 207, 215, 216) in the "brake closed" state or "brake released" state when a parking brake in a towing vehicle is actuated in the closing direction or releasing direction by a driver of the vehicle, wherein the immobilizer is activated in such a manner that the electronic trailer braking system (202) is driven, remotely controlled by the control device, in order to place the parking brake of the brake assembly (206, 207, 215, 216) permanently in the "brake closed" state, only when the trailer vehicle has been uncoupled from the towing vehicle and parked, and wherein the immobilizer is deactivated when the trailer vehicle has been coupled to a towing vehicle and also the parking brake in the towing vehicle has been applied.

2. Method for activating an immobilizer for a trailer vehicle which can be coupled to a towing vehicle, with an electronic trailer braking system (202) and with a brake assembly (206, 207, 215, 216) driven by said trailer braking system (202) and exhibiting a parking brake, wherein the electronic trailer braking system (202) can be driven by means of a control device (220) in order to bring about the immobilization by driving the brake assembly (206, 207, 215, 216) and in order to apply the brakes on the trailer vehicle by means of the brake assembly (206, 207, 215, 216) so as to counter unauthorized removal, according to Claim 1, with the following steps:
- entering an activation command into a workstation (204) which is remote from the vehicle,
- transmitting the activation command to a telematics center (208),
- wireless sending of the activation command from the telematics center (208) to a GSM receiver or GPRS receiver (209) on the trailer vehicle, and forwarding of the activation command to the control device (220),
- storing the activation command to the control device (220),
- sensing whether the trailer vehicle is coupled to a towing vehicle or uncoupled,
- sensing whether the trailer vehicle is moving or stationary, and
- activating the electronic trailer braking system (202) in order to place the parking brake of the brake assembly (206, 207, 215, 216) permanently in the "brake closed" state when the trailer vehicle is uncoupled from the towing vehicle and is stationary.

3. Method for deactivating an immobilizer according to Claim 1 or 2, with the following steps:
- entering a deactivation command into a workstation (204) which is remote from the vehicle,
- transmitting the deactivation command to a telematics center (208),
- wireless sending of the deactivation command from the telematics center (208) to a GSM receiver or GPRS receiver (209) on the trailer vehicle, and forwarding of the deactivation command to the control device (220),
- sensing whether the trailer vehicle is coupled onto a towing vehicle,
- sensing whether the parking brake in the towing vehicle is actuated in the closing direction,
- deactivating the activation command when these conditions have been fulfilled,
- placing the brake assembly (206, 207, 215, 216) in the "brake released" state.

4. Method according to one of Claims 1 to 3, **characterized in that** the electronic trailer braking system (202) places the brake assembly (206, 207, 215, 216) of the trailer vehicle in the "brake released" state by deactivating the activation command only when the towing vehicle is recognized as a towing vehicle authorized for the towing of the trailer vehicle.

5. Method according to Claim 4, **characterized in that** the activation command is coded specifically with respect to an authorized towing vehicle and/or with respect to a defined trailer vehicle.

6. Method according to one of Claims 4 or 5, **characterized in that** specific activation commands are coded for a fleet of towing vehicles and trailer vehicles.

7. Method according to one of Claims 1 to 6, **characterized in that** the activation command is generated automatically when the trailer vehicle is parked at a predetermined geographical location.

8. Method according to one of Claims 1 to 7, **characterized in that** the sensing whether the trailer vehicle is coupled to a towing vehicle or uncoupled from the latter is effected by means of a coupling sensor (211) on a coupling head (201) for a storage pressure or in a pneumatic line (240) between said coupling head (201) and the trailer brake valve (230).

9. Method according to one of Claims 1 to 8, **characterized in that** the sensing whether the trailer vehicle is moving or stationary is effected by at least one wheel rotation sensor (217).

10. System for actuating an immobilizer for a trailer vehicle which can be coupled to a towing vehicle, with an electronic trailer braking system (202) and with a brake assembly (206, 207, 215, 216) driven by said trailer braking system (202) and exhibiting a parking brake, wherein the electronic trailer braking system (202) can be driven by means of a control device (220) in order to bring about the immobilization by driving the brake assembly (206, 207, 215, 216), and to apply the brakes on the trailer vehicle by means of the brake assembly (206, 207, 215, 216) so as to counter unauthorized removal, for implementing the method according to one of Claims 1 to 8, **characterized by** a workstation (204) which is remote from the vehicle, connected to a telematics center (208) and has the purpose of entering and/or programming an activation command, a control device (220) on the trailer vehicle, which control device (220) is connected directly or indirectly via sensor lines or data lines to a GSM receiver or GPRS receiver (209), to at least one wheel rotation sensor (217) on the trailer vehicle, and to a coupling sensor (211) on the trailer vehicle, wherein the telematics center (208) is configured to transmit the activation command in wireless manner to the GSM receiver or GPRS receiver (209), the GSM receiver or GPRS receiver (209) is configured to receive the activation command from the telematics center (208) and to forward it to the control device (220) for storage and further processing therein, and the control device (220) is configured to receive a signal from the coupling sensor (211) as to whether the trailer vehicle is coupled to a towing vehicle or uncoupled, to receive a signal from the wheel rotation sensor (217) as to whether the trailer vehicle is moving or stationary, and is configured to forward a signal to the electronic trailer braking system (202) of the trailer vehicle in order to bring about the immobilization by closing the parking brake when the trailer vehicle has been uncoupled from the towing vehicle and is stationary.

11. System according to Claim 10, **characterized in that** the coupling sensor (211) is arranged on a coupling head (201) for a pneumatic storage pressure or in a pneumatic line (240) between the coupling head (201) and the trailer brake valve (230), and senses the pressure applied thereto.

12. System according to Claim 10 or 11, **characterized in that** the brake assembly (206, 207, 215, 216) exhibits a bistable, electromagnetically switchable surge valve (210) which can assume two stable operating states in which the surge valve (210) remains in each case after the disconnecting of the energy supply, wherein in a first operating state a spring-brake cylinder (215) is bled.

13. Control device (220) for actuating an immobilizer for a trailer vehicle which can be coupled to a towing vehicle, with an electronic trailer braking system (202) and with a brake assembly (206, 207, 215, 216) which can be driven by said braking system and exhibits a parking brake, wherein the electronic trailer braking system (202) can be driven by the control device (220) in order to bring about the immobilization by driving the brake assembly (206, 207, 215, 216), and to apply the brakes to the trailer vehicle by means of the brake assembly (206, 207, 215, 216) so as to counter unauthorized removal, **characterized in that** the control device (220) is designed in such a manner that it can accept, store and process an activation command received from a GSM receiver or GPRS receiver (209), that it can directly or indirectly receive and process a rotational speed signal acquired by a wheel rotation sensor (217) on the trailer vehicle as to whether the trailer vehicle is moving or stationary, that it can directly or indirectly receive and process a signal generated by a coupling sensor (211) on the trailer vehicle as to whether the trailer vehicle has been coupled to a towing vehicle or uncoupled, and that it can forward signals to the electronic trailer braking system (202) of the trailer vehicle in order to bring about the immobilization by closing the parking brake when the trailer vehicle is uncoupled from the towing vehicle and is stationary.

## Revendications

1. Procédé d'actionnement d'un organe d'immobilisation pour une remorque pouvant être couplée à un véhicule tracteur, avec un système de frein de remorque électronique (202) et une installation de frein (206, 207, 215, 216) commandée par lui et comportant un frein de stationnement, le système de frein de remorque électronique (202) pouvant être commandé au moyen d'un dispositif de commande (220) pour entraîner l'organe d'immobilisation par commande de l'installation de frein (206, 207, 215, 216) et pour freiner la remorque à l'aide de l'installation de frein (206, 207, 215, 216) en vue d'éviter un éloignement involontaire, **caractérisé en ce que** le système de frein de remorque électronique (202) place l'installation de frein (206, 207, 215, 216) dans l'état « frein serré » ou « frein desserré » lorsqu'un frein de stationnement est actionné dans un véhicule tracteur par un conducteur du véhicule dans la direction de serrage ou la direction de desserrage, l'organe d'immobilisation étant activé de façon à ce que le système de frein de remorque électronique (202) ne soit commandé de façon télécommandée par le dispositif de commande que pour placer le frein de stationnement de l'installation de frein (206, 207, 215, 216) de façon durable dans l'état « frein serré » lorsque la remorque est découplée et reléguée par le véhicule tracteur et l'organe d'immobilisation étant désactivé lorsque la remorque est couplée à un véhicule tracteur ainsi que lorsque le frein de stationnement est mis dans le véhicule tracteur.

2. Procédé d'activation d'un organe d'immobilisation pour une remorque pouvant être couplée à un véhicule tracteur, avec un système de frein de remorque électronique (202) et une installation de frein (206, 207, 215, 216) commandée par lui et comportant un frein de stationnement, le système de frein de remorque électronique (202) pouvant être commandé au moyen d'un dispositif de commande (220), pour entraîner l'organe d'immobilisation par commande de l'installation de frein (206, 207, 215, 216) et pour freiner la remorque à l'aide de l'installation de frein (206, 207, 215, 216) afin d'éviter un éloignement involontaire, selon la revendication 1, avec les étapes suivantes :
- saisie d'un ordre d'activation dans une station de travail (204) placée à distance du véhicule ;
- transmission de l'ordre d'activation à une centrale télématique (208) ;
- envoi sans fil de l'ordre d'activation par la centrale télématique (208) à un récepteur GSM ou GPRS (209) placé au niveau de la remorque et transfert de l'ordre d'activation au dispositif de commande (220) ;
- mémorisation de l'ordre d'activation dans le dispositif de commande (220) ;
- détection de si la remorque est couplée ou découplée au véhicule tracteur ;
- détection de si la remorque se déplace ou est arrêtée ; et
- activation du système de frein de remorque électronique (202) en vue de placer le frein de stationnement de l'installation de frein (206, 207, 215, 216) de façon durable dans l'état « frein serré » lorsque la remorque est découplée du véhicule tracteur ou est arrêtée.

3. Procédé de désactivation d'un organe d'immobilisation selon la revendication 1 ou 2, avec les étapes suivantes :
- saisie d'un ordre de désactivation dans une station de travail (204) placée à distance du véhicule ;
- transmission de l'ordre de désactivation à une centrale télématique (208) ;
- envoi sans fil de l'ordre de désactivation à partir de la centrale télématique (208) à un récepteur GSM ou GPRS (209) à la remorque et transfert de l'ordre de désactivation au dispositif de commande (220) ;
- détection de si la remorque est couplée à un véhicule tracteur ;
- détection de si le frein de stationnement est actionné dans le véhicule tracteur en direction de serrage ;
- désactivation de l'ordre d'activation lorsque ces conditions sont remplies ;
- placement de l'installation de frein (206, 207, 215, 216) dans l'état « frein desserré ».

4. Procédé selon l'une quelconque des revendications 1 à 3, **caractérisé en ce que** le système de frein de remorque électronique (202) ne déplace l'installation de frein (206, 207, 215, 216) de la remorque que par désactivation de l'ordre d'activation dans l'état « frein desserré » lorsque le véhicule tracteur est détecté sous la forme d'un véhicule tracteur autorisé pour la traction de la remorque.

5. Procédé selon la revendication 4, **caractérisé en ce que** l'ordre d'activation est codé spécifiquement par rapport à un véhicule tracteur autorisé et/ou par rapport à une remorque défini.

6. Procédé selon l'une quelconque des revendications 4 ou 5, **caractérisé en ce que** des ordres d'activation spécifiques pour une flotte de véhicules tracteurs et remorques.

7. Procédé selon l'une quelconque des revendications 1 à 6, **caractérisé en ce que** l'ordre d'activation est généré de façon automatique pour reléguer la remorque à un lieu géographique prédéfini.

8. Procédé selon l'une quelconque des revendications 1 à 7, **caractérisé en ce que** la détection de si la remorque est couplée à un véhicule tracteur ou découplé de celui-ci se produit à l'aide d'un détecteur de couplage (211) au niveau d'une tête de couplage (201) pour une pression de réserve ou dans une conduite pneumatique (240) entre ladite tête de couplage (201) et la soupape de frein de remorque (230).

9. Procédé selon l'une quelconque des revendications 1 à 8, **caractérisé en ce que** la détection se produit si la remorque se déplace ou est arrêté par au moins un détecteur de rotation de roue (217)..

10. Système d'actionnement d'un organe d'immobilisation pour une remorque pouvant être couplée à un véhicule tracteur, avec un système de frein de remorque électronique (202) et une installation de frein (206, 207, 215, 216) commandée par lui et comportant un frein de stationnement, le système de frein de remorque électronique (202) pouvant être entraîné au moyen d'un dispositif de commande (220) pour commander l'organe d'immobilisation de l'installation de frein (206, 207, 215, 216) et pour freiner la remorque contre un éloignement involontaire à l'aide de l'installation de frein (206, 207, 215, 216), pour mettre en oeuvre le procédé selon l'une quelconque des revendications 1 à 8, **caractérisé par** une station de travail (204) placée à distance du véhicule et reliée à une centrale télématique (208) pour la saisie et/ou la programmation d'un ordre d'activation, par un dispositif de commande (220) prévu au niveau de la remorque, reliant directement ou indirectement, à l'aide d'un récepteur GSM ou GPRS (209), au moins un détecteur de rotation de roue (217) prévu au niveau de la remorque et un détecteur de couplage (211) prévu au niveau de la remorque via des câbles de détection ou de données, la centrale télématique (208) étant conçue pour transmettre l'ordre d'activation sans fil au récepteur GSM ou GPRS (209), le récepteur GSM ou GPRS (209) étant conçu pour recevoir l'ordre d'activation provenant de la centrale télématique (208) et le transférer au dispositif de commande (220) pour l'y mémoriser et l'y transformer et le dispositif de commande (220) étant conçu pour recevoir un signal provenant du détecteur de couplage (211) si la remorque est couplée ou découplée du véhicule tracteur, pour recevoir un signal provenant du détecteur de rotation de roue (217) si la remorque est déplacée ou arrêtée, ainsi que conçu pour transférer un signal au système de frein de remorque électronique (202) de la remorque pour entraîner l'organe d'immobilisation en serrant le frein de stationnement lorsque la remorque est débrayée du véhicule tracteur et arrêtée.

11. Système selon la revendication 10, **caractérisé en ce que** le détecteur de couplage (211) est disposé au, niveau d'une tête de couplage (201) pour une pression de réserve pneumatique ou dans une conduite pneumatique (240) entre la tête de couplage (201) et la soupape de frein de remorque (230) et détecte la pression y régnant.

12. Système selon la revendication 10 ou 11, **caractérisé en ce que** l'installation de frein (206, 207, 215, 216) comporte un télérupteur (210) bistable à commutation électromagnétique pouvant prendre deux états de fonctionnement stables dans lesquels le télérupteur (210) reste respectivement après la déconnexion de l'alimentation électrique, purgeant un cylindre de frein à accumulation à ressort (215) dans un premier état de fonctionnement.

13. Dispositif de commande (220) pour actionner un organe d'immobilisation pour une remorque pouvant être couplée à un véhicule tracteur, avec un système de frein de remorque électronique (202) et une installation de frein (206, 207, 215, 216) pouvant être commandée par lui et comportant un frein de stationnement, le système de frein de remorque électronique (202) pouvant être commandé par le dispositif de commande (220) pour entraîner l'organe d'immobilisation en commandant l'installation de frein (206, 207, 215, 216) et freiner la remorque à l'aide de l'installation de frein (206, 207, 215, 216) pour empêcher un éloignement involontaire, **caractérisé en ce que** le dispositif de commande (220) est réalisé de telle sorte qu'il peut prendre, mémoriser et traiter un ordre d'activation reçu d'un récepteur GSM ou GPRS (209), qu'il peut recevoir directement ou indirectement et traiter un signal de vitesse de rotation déterminé par un détecteur de rotation de roue (217) au niveau de la remorque si la remorque se déplace ou s'arrête, qu'il peut recevoir directement ou indirectement et traiter un signal généré par un détecteur de couplage (211) au niveau de la remorque si la remorque est couplée à un véhicule tracteur ou découplée de celui-ci et qu'il peut transférer des signaux au système de frein de remorque électronique (202) de la remorque transfert pour entraîner l'organe d'immobilisation en serrant le frein de stationnement lorsque la remorque est découplée du véhicule tracteur et est arrêtée.
